# EUROPEAN PATENT APPLICATION

(11) **EP 1 973 040 A1**
(43) Date of publication of application: **24.09.2008**
(21) Application number: 06833377.2
(22) Date of filing: 27.11.2006
(51) Int. Cl.: G06F 12/00

(54) **DOCUMENT VIEWING TERMINAL OPERATING APPARATUS AND RECORDING MEDIUM HAVING DOCUMENT VIEWING TERMINAL OPERATING PROGRAM**

(30) Priority: 13.01.2006 JP 2006006684
(71) Applicant: Brother Kogyo Kabushiki Kaisha, Nagoya-shi, Aichi 467-8561 (JP)
(72) Inventor: MUROI, Kazushige, Nagoya-shi, Aichi 467-8562 (JP)
(74) Representative: Smith, Samuel Leonard
(86) International application number: PCT/JP2006/323573
(87) International publication number: WO 2007/080712

(57) **Abstract**

A PC 20 stores a command for specifying a document to be imported to a document viewing terminal 10 and a command for specifying a document to be deleted in a state where the PC 20 is not connected to the document viewing terminal 10, and stored commands are executed at a time when the PC 20 is connected to the document viewing terminal 10. Also, in the document viewing terminal 10, a document to be displayed is newly added or deleted in accordance with instructions from the PC 20 when connected to the PC 20 (document viewing terminal operating device). Further, when a document is viewed, a view date and a status of unread/read are updated. Since received document information storing such information is transmitted to the PC 20 when the PC 20 and the document viewing terminal 10 are connected, a history database in the PC 20 and the received document information in the document viewing terminal 10 can be synchronized. Accordingly, a document viewing terminal operating device and a storage medium storing a program for operating a document viewing terminal that facilitates specifying of a document that is viewed on the document viewing terminal can be provided.

## Description

### Technical Field

The present invention relates to a document viewing terminal operating device and a storage medium storing a program for operating a document viewing terminal, and more particularly, to a document viewing terminal operating device and a storage medium storing a program for operating document viewing terminal that facilitates specifying of a document that is viewed on the document viewing terminal.

### Background Art

Conventionally, when acquiring a document viewed on a portable-type document viewing terminal by connecting to another device, the portable-type document viewing terminal is connected to the other device. In that device, software for transmitting data of a document to the document viewing terminal is launched, a document to be transmitted is specified, and the data of the document is transmitted to the document viewing terminal. Some software for such transmission also stores and manages documents transmitted to the document viewing terminal and their transmission dates and times. As a system that exchanges and synchronizes data between a device and a document viewing terminal in this way, a communication system described in Patent Document 1 has been proposed. In this portable information terminal, data to be transmitted to a personal computer is stored in a spool area of RAM 26.
Patent Reference 1: Japanese Patent Application No. 10-178500

### Disclosure of the Invention

### Technical Problem

However, with the conventional method for launching software and specifying a document after connecting the document viewing terminal to the device, there is a problem that the document viewing terminal has to be connected to the device when transmitting data to the document viewing terminal. That is, if the document viewing terminal is not at hand when data to be transmitted to the document viewing terminal has been found, the data cannot be transmitted immediately. Hence, it becomes necessary that the document viewing terminal is connected later and the data to be transmitted is searched for again and transmitted. Or, it becomes necessary that the data is saved at a predetermined location and the document viewing terminal is connected later for transmitting the data. Specifying the document viewed on the document viewing terminal in this way is troublesome, which is problematic.

Further, in the communication system described in Patent Document 1, a large storage area is occupied since the data to be transmitted are stored in the spool area.

In view of the foregoing, it is an object of the present invention to provide a document viewing terminal operating device and a storage medium storing a program for operating a document viewing terminal that facilitates specifying of a document that is viewed on the document viewing terminal.

### Technical Solution

In order to solve the above-described problems, a document viewing terminal operating device according to the invention of claim 1 is connected to a document viewing terminal that displays a document and transmits the document to the document viewing terminal, the document viewing terminal operating device being characterized by including: connecting means for connecting to the document viewing terminal; connection detecting means for detecting that the document viewing terminal is connected to the connecting means; document reading means for reading a document; format converting means for converting the document read by the document reading means to a conversion document that is a document in a file format that can be displayed on the document viewing terminal; transmitting means for transmitting data to the document viewing terminal; conversion document transmission controlling means for transmitting the conversion document to the document viewing terminal by the transmitting means, after the document is converted by the format converting means; operation inputting means for inputting an instruction of at least one operation among import, deletion, or update of the document in the document viewing terminal; operation information storing means for storing operation information that is information indicative of content of operation to the document viewing terminal; operation information storage controlling means for storing the operation information in the operation information storing means, if the instruction of operation to the document viewing terminal is inputted by the operation inputting means and if the document viewing terminal is not connected to the connecting means; and operation execution controlling means for executing the instruction indicated by the operation information, if the connection detecting means detects that the document viewing terminal is connected and if the operation information is stored in the operation information storing means.

Further, in addition to the configuration of the invention recited in claim 1, a document viewing terminal operating device according to the invention of claim 2 is characterized by that the operation information storage controlling means stores information indicative of a storage location of the document in the operation information storing means as the operation information, not content of the document, in response to an instruction for importing the document to the document viewing terminal.

Further, in addition to the configuration of the invention recited in claim 2, a document viewing terminal operating device according to the invention of claim 3 is characterized by further including: operation information deleting means for deleting the operation information from the operation information storing means; and first operation information deletion controlling means for deleting the operation information from the operation information storing means by the operation information deleting means if the document is not stored at the storage location of the operation information stored in the operation information storing means, when the operation execution controlling means executes an instruction of the operation information.

Further, in addition to the configuration of the invention recited in claim 2, a document viewing terminal operating device according to the invention of claim 4 is characterized by further including: operation information deleting means for deleting the operation information from the operation information storing means; deletion instruction requesting means for requesting an instruction of whether the operation information is to be deleted by the operation information deleting means if the document is not stored at the storage location of the operation information stored in the operation information storing means, when the operation execution controlling means executes an instruction of the operation information; deletion instruction inputting means for inputting an instruction of whether the operation information is to be deleted by the operation information deleting means in accordance with a request by the deletion instruction requesting means; and second operation information deletion controlling means for deleting the operation information from the operation information storing means by the operation information deleting means when the deletion instruction inputting means has inputted that the operation information is to be deleted.

Further, in addition to the configuration of the invention recited in one of claims 1 through 4, a document viewing terminal operating device according to the invention of claim 5 is characterized by that received document information is stored in the document viewing terminal. The received document information is information relating to the conversion document transmitted from the document viewing terminal operating device, and includes at least one of the following information; content of the document, a storage location of the document, information indicative of whether the document is read or unread, information indicative of evaluation by a reader for the document, and date and time on which the document is displayed. The document viewing terminal operating device is characterized by further including: transmitted document information storing means for storing transmitted document information that is information relating to the document transmitted to the document viewing terminal, the transmitted document information including at least one of content of the document, information indicative of whether the document is read or unread, information indicative of evaluation by a reader for the document, and date and time on which the document is displayed; received document information reading means for reading the received document information stored in the connected document viewing terminal if the connection detecting means has detected that the document viewing terminal is connected; document information comparison determining means for determining whether the received document information read by the received document information reading means is identical to the transmitted document information stored in the transmitted document information storing means; and transmitted document information updating means for changing content of the transmitted document information to content of the received document information if the document information comparison determining means has determined that the received document information is different from the transmitted document information.

Further, in addition to the configuration of the invention recited in claim 5, a document viewing terminal operating device according to the invention of claim 6 is characterized by further including first document information matching means for storing the content of the received document information in the transmitted document information storing means, if the document information comparison determining means has determined that there is information which exists in the received document information but does not exist in the transmitted document information and that the received document information is different from the transmitted document information.

Further, in addition to the configuration of the invention recited in claim 5, a document viewing terminal operating device according to the invention of claim 7 is characterized by further including second document information matching means for executing an instruction for deleting the received document information from the document viewing terminal, if the document information comparison determining means has determined that there is information which exists in the received document information but does not exist in the transmitted document information and that the received document information is different from the transmitted document information.

Further, in addition to the configuration of the invention recited in claim 5, a document viewing terminal operating device according to the invention of claim 8 is characterized by that the operation inputting means identifies the document to be deleted, by selecting one of the transmitted document information in the transmitted document information storing means.

Further, in addition to the configuration of the invention recited in claim 5, a document viewing terminal operating device according to the invention of claim 9 is characterized by that, if a storage location of a document in the transmitted document information stored in the transmitted document information storing means is in the document viewing terminal operating device itself, information indicative of the storage location is stored; and that, if the storage location of the document is not in the document viewing terminal operating device but in another device connected via a network, content of the document is stored.

Further, in addition to the configuration of the invention recited in claim 1, a document viewing terminal operating device according to the invention of claim 10 is characterized by that identification information for distinguishing the document viewing terminal from another document viewing terminal is assigned to the document viewing terminal, and the operation information storing means is provided for each identification information.

Further, in addition to the configuration of the invention recited in claim 1, a document viewing terminal operating device according to the invention of claim 11 is characterized by that the document viewing terminal includes: confirmation request signal transmitting means for transmitting a confirmation request signal to the document viewing terminal operating device that has created the operation information, the confirmation request signal being a signal for requesting confirmation of whether to execute deletion of the document, if the received document information of the document instructed to be deleted includes information indicating that the document is unread, when the document instructed to be deleted is deleted based on an instruction to delete the document by the operation information; and deletion controlling means for receiving a deletion determination result signal indicative of a determination result of whether to execute deletion transmitted from the document viewing terminal operating device in response to the confirmation request signal, and for deleting at least one of a conversion document of the document instructed to be deleted and the received document information. The document viewing terminal operating device is characterized by further including: confirmation request signal receiving means for receiving the confirmation request signal transmitted from the confirmation request signal transmitting means; deletion judgment requesting means for requesting judgment of whether to execute deletion of the document instructed to be deleted, if the confirmation request signal receiving means has received the confirmation request signal; deletion judgment inputting means for inputting deletion judgment of whether to execute deletion of the document in response to a request by the deletion judgment requesting means; and deletion judgment result signal transmitting means for transmitting, to the document viewing terminal, a deletion judgment result signal that is the deletion judgment inputted by the deletion judgment inputting means.

Further, a storage medium storing a document viewing terminal operating program according to the invention of claim 12 is characterized by allowing a computer to function as each of processing means of the document viewing terminal operating device as claimed in claim 1.

Further, in addition to the configuration of the invention recited in claim 12, a storage medium storing a document viewing terminal operating program according to the invention of claim 13 is characterized by storing: a connection program for allowing the computer to function as the connecting means and the connection detecting means as claimed in claim 1; and an operation program for allowing the computer to function as each of processing means as claimed in claim 1, except the connecting means and the connection detecting means as claimed in claim 1, wherein the connection program has a launch function that launches the operation program in the computer when the connection detecting means has detected that the document viewing terminal is connected to the connecting means.

### Advantageous Effects

With the document viewing terminal operating device according to the invention of claim 1, the connecting means can connect to the document viewing terminal, the connection detecting means can detect that the document viewing terminal is connected to the connecting means, the document reading means can read a document, the format converting means can convert the document read by the document reading means to a conversion document that is a document in a file format that can be displayed on the document viewing terminal, the transmitting means can transmit data to the document viewing terminal, the conversion document transmission controlling means can transmit the conversion document to the document viewing terminal by the transmitting means after the document is converted by the format converting means, the operation inputting means can input an instruction of at least one operation among import, deletion, or update of the document in the document viewing terminal, the operation information storing means can store operation information that is information indicative of content of operation to the document viewing terminal, the operation information storage controlling means can store the operation information in the operation information storing means if the instruction of operation to the document viewing terminal is inputted by the operation inputting means and if the document viewing terminal is not connected to the connecting means, and the operation execution controlling means can execute the instruction indicated by the operation information, if the connection detecting means detects that the document viewing terminal is connected and if the operation information is stored in the operation information storing means. Accordingly, even if the document viewing terminal is not connected to the document viewing terminal operating device, operations to the document viewing terminal can be performed. Hence, the operations can be performed beforehand at a time when an operator wishes to operate even if the document viewing terminal is not at that location.

Further, in addition to the effects of the invention recited in claim 1, with the document viewing terminal operating device according to the invention of claim 2, the operation information storage controlling means can store information indicative of a storage location of the document in the operation information storing means as the operation information, not content of the document, in response to an instruction for importing the document to the document viewing terminal. Accordingly, since only stored is the storage location that requires a smaller storage space, not the content of the document, the storage space can be made smaller.

Further, in addition to the effects of the invention recited in claim 2, with the document viewing terminal operating device according to the invention of claim 3, the operation information deleting means can delete the operation information from the operation information storing means, and the first operation information deletion controlling means can delete the operation information from the operation information storing means by the operation information deleting means if the document is not stored at the storage location of the operation information stored in the operation information storing means, when the operation execution controlling means executes an instruction of the operation information. Accordingly, since the operation for the document that does not exist is deleted automatically, there is no need to take the trouble to delete the operation information.

Further, in addition to the effects of the invention recited in claim 2, with the document viewing terminal operating device according to the invention of claim 4, the operation information deleting means can delete the operation information from the operation information storing means, the deletion instruction requesting means can request an instruction of whether the operation information is to be deleted by the operation information deleting means if the document is not stored at the storage location of the operation information stored in the operation information storing means, when the operation execution controlling means executes an instruction of the operation information, the deletion instruction inputting means can input an instruction of wether the operation information is to be deleted by the operation information deleting means in accordance with a request by the deletion instruction requesting means, and the second operation information deletion controlling means can delete the operation information from the operation information storing means by the operation information deleting means when the deletion instruction inputting means has inputted that the operation information is to be deleted. Accordingly, an operator can know that there is a document that does not exist. Further, since the operation information is not deleted, the operation information can be reutilized if the operator stores the document at the location.

Further, in addition to the effects of the invention recited in one of claims 1 through 4, with the document viewing terminal operating device according to the invention of claim 5, the transmitted document information storing means can store transmitted document information that is information relating to the document transmitted to the document viewing terminal, the transmitted document information including at least one of content of the document, information indicative of whether the document is read or unread, information indicative of evaluation by a reader for the document, and date and time on which the document is displayed, the received document information reading means can read the received document information stored in the connected document viewing terminal if the connection detecting means has detected that the document viewing terminal is connected, the document information comparison determining means can determine whether the received document information read by the received document information reading means is identical to the transmitted document information stored in the transmitted document information storing means, and the transmitted document information updating means can change content of the transmitted document information to content of the received document information if the document information comparison determining means has determined that the received document information is different from the transmitted document information. Accordingly, information relating to documents in the document viewing terminal operating device and information relating to documents in the document viewing terminal can be synchronized.

Further, in addition to the effects of the invention recited in claim 5, with the document viewing terminal operating device according to the invention of claim 6, the first document information matching means can store the content of the received document information in the transmitted document information storing means, if the document information comparison determining means has determined that there is information which exists in the received document information but does not exist in the transmitted document information and that the received document information is different from the transmitted document information. Accordingly, information on a document that is not transmitted from the document viewing terminal operating device can also be managed on the document viewing terminal operating device.

Further, in addition to the effects of the invention recited in claim 5, with the document viewing terminal operating device according to the invention of claim 7, the second document information matching means can execute an instruction for deleting the received document information from the document viewing terminal, if the document information comparison determining means has determined that there is information which exists in the received document information but does not exist in the transmitted document information and that the received document information is different from the transmitted document information. Accordingly, a document that is not transmitted from the document viewing terminal operating device can be deleted from the document viewing terminal.

Further, in addition to the effects of the invention recited in claim 5, with the document viewing terminal operating device according to the invention of claim 8, the operation inputting means can identify the document to be deleted, by selecting one of the transmitted document information in the transmitted document information storing means. Accordingly, the document to be deleted can be specified easily.

Further, in addition to the effects of the invention recited in claim 5, with the document viewing terminal operating device according to the invention of claim 9, if a storage location of a document in the transmitted document information stored in the transmitted document information storing means is in the document viewing terminal operating device itself, information indicative of the storage location can be stored and, if the storage location of the document is not in the document viewing terminal operating device but in another device connected via a network, content of the document can be stored. Accordingly, even if the document viewing terminal operating device is not connected to the network, the content of the document stored in the transmitted document information can be known.

Further, in addition to the effects of the invention recited in claim 1, with the document viewing terminal operating device according to the invention of claim 10, identification information for distinguishing the document viewing terminal from another document viewing terminal is assigned to the document viewing terminal, and the operation information storing means can be provided for each identification information. Accordingly, operations to a plurality of document viewing terminals can be performed on a single document viewing terminal operating device.

Further, in addition to the effects of the invention recited in claim 1, with the document viewing terminal operating device according to the invention of claim 11, the confirmation request signal receiving means can receive the confirmation request signal transmitted from the confirmation request signal transmitting means, the deletion judgment requesting means can request judgment of whether to execute deletion of the document instructed to be deleted, if the confirmation request signal receiving means has received the confirmation request signal, the deletion judgment inputting means can input deletion judgment of whether to execute deletion of the document in response to a request by the deletion judgment requesting means, and the deletion judgment result signal transmitting means can transmit, to the document viewing terminal, a deletion judgment result signal that is the deletion judgment inputted by the deletion judgment inputting means. Accordingly, a document that is not yet read can be prevented from being deleted erroneously.

Further, the storage medium storing the document viewing terminal operating program according to the invention of claim 12 can allow a computer to function as each of processing means of the document viewing terminal operating device recited in claim 1.

Further, the storage medium storing the document viewing terminal operating program according to the invention of claim 12 can allow a computer to function as each of processing means of the document viewing terminal operating device recited in claim 1.

Further, in addition to the effects of the invention recited in claim 12, with the storage medium storing the document viewing terminal operating program according to the invention of claim 13, the connection program can launch the operation program in the computer when the connection detecting means has detected that the document viewing terminal is connected to the connecting means.

### BRIEF DESCRIPTION OF THE DRAWINGS

Fig. 1 is a system configuration diagram showing relationships between a document viewing terminal 10 and a PC 20 according to a present embodiment;
Fig. 2 is an exterior view of the document viewing terminal 10;
Fig. 3 is a block diagram showing an electrical configuration of the document viewing terminal 10;
Fig. 4 is a block diagram showing an electrical configuration of the PC 20;
Fig. 5 is an explanatory diagram showing a configuration of a history database storage area 281;
Fig. 6 is an explanatory diagram showing a configuration of a reserved command storage area 282;
Fig. 7 is an explanatory diagram showing a configuration of a received document information storage area 1111;
Fig. 8 is a flowchart of a main process of a document viewing terminal operating program in a state where the document viewing terminal 10 is not connected;
Fig. 9 is a flowchart of the main process of the document viewing terminal operating program in a state where the document viewing terminal 10 is connected;
Fig. 10 is a flowchart of an in-device data extraction process executed in the main process when the document viewing terminal 10 is connected;
Fig. 11 is a flowchart of an operation reservation queue process executed in the main process when the document viewing terminal 10 is connected;
Fig. 12 is a flowchart of a device main process executed in the document viewing terminal 10;
Fig. 13 is a flowchart of a next article display process executed in the device main process;
Fig. 14 is a flowchart of a previous article display process executed in the device main process;
Fig. 15 is a flowchart of an evaluation value registration process executed in the device main process;
Fig. 16 is a flowchart of a deletion reservation process executed in the device main process; and
Fig. 17 is a flowchart of a deletion process executed in the device main process.

### Description of Reference Numerals

- 10: Document viewing terminal
- 20: PC
- 30: Internet
- 83: Previous key
- 84: Next key
- 85: Evaluation key
- 86: Deletion key
- 200: CPU
- 204: Video controller
- 208: USB controller
- 281: History database storage area
- 282: Reserved command storage area
- 111: Received document information storage area

### Best Mode for Carrying Out the Invention

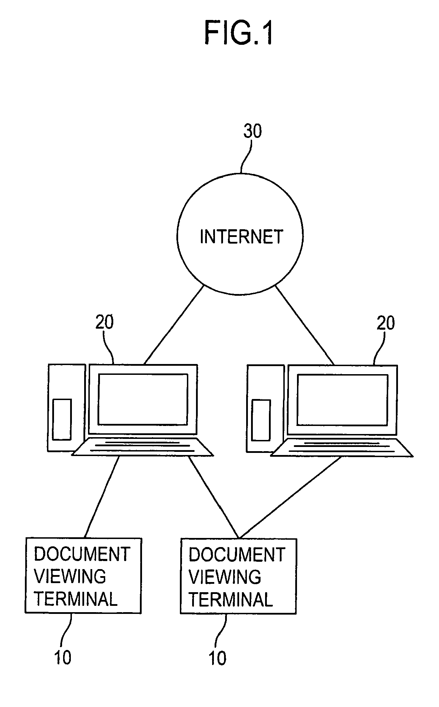

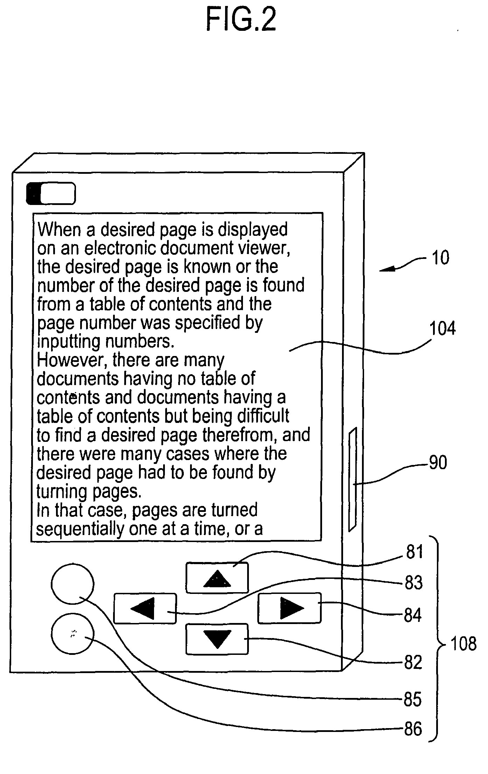

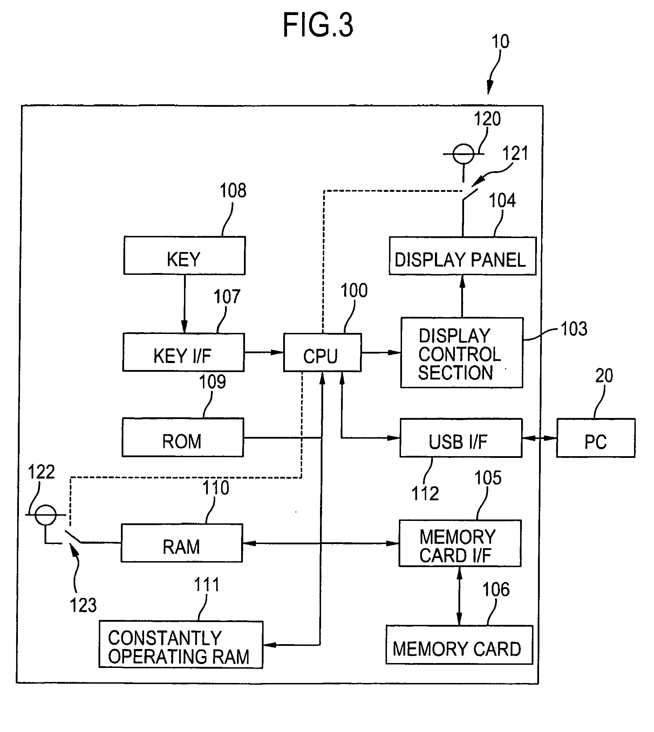

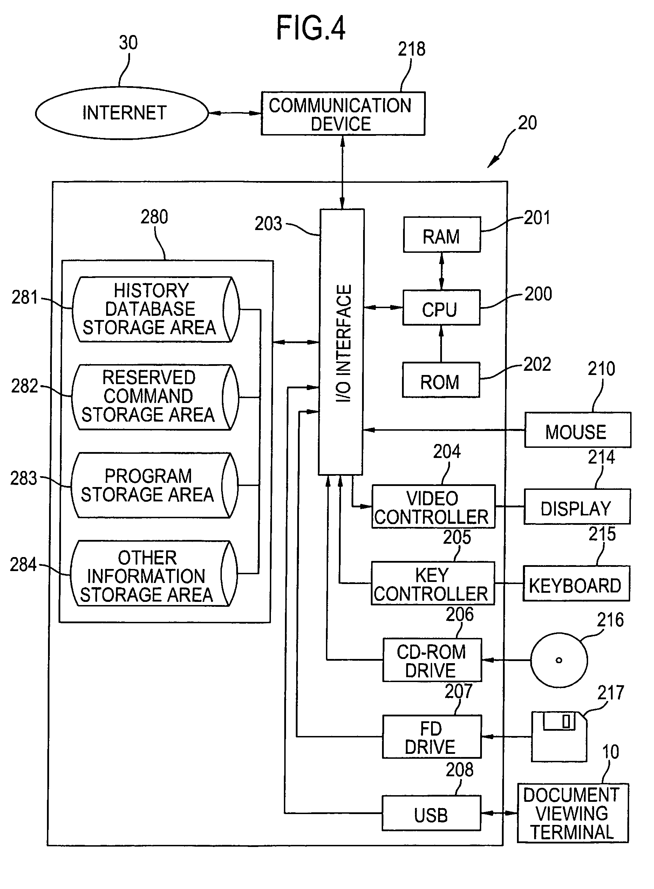

An embodiment of the present invention will be hereinafter described while referring to the accompanying drawings. Fig. 1 is a system configuration diagram showing relationships between a document viewing terminal 10 and a personal computer (hereinafter referred to as PC) 20 according to the present embodiment. Fig. 2 is an exterior view of the document viewing terminal 10. Fig. 3 is a block diagram showing an electrical configuration of the document viewing terminal 10. Fig. 4 is a block diagram showing an electrical configuration of the PC 20.

As shown in Fig. 1, the document viewing terminal 10 is connectable to the PC 20 that can be connected to an Internet 30. The document viewing terminal 10 connects to the PC 20 and acquires a document for viewing. Documents that can be acquired from the PC 20 include documents stored in a hard disk of the PC 20, documents laid open on the Internet 30, documents which the PC 20 has read from external storage devices (for example, a CD-ROM 216 and a flexible disk 217), and the like. Further, if the PC 20 is connected to a LAN, documents existing on the LAN can also be acquired. The document viewing terminal 10 stores a unique ID (device ID), and a single PC 20 can manage a plurality of document viewing terminals 10 and transmit documents thereto. Further, it is possible to connect a single document viewing terminal 10 to different PCs 20 and to acquire documents. Note that the documents are not limited to text only information and may include images or figures.

First, the exterior appearance of the document viewing terminal 10 will be described while referring to Fig. 2. As shown in Fig. 2, the document viewing terminal 10 has substantially a rectangular parallelepiped shape, and a display panel 104 is provided on the front face thereof. Below the display panel 104 provided are operation keys 108 consisting of an up key 81, a down key 82, a previous key 83, a next key 84, an evaluation key 85, and a delete key 86. Further, an insertion slot 90 for inserting a memory card 106 is provided on a right side surface.

Next, the electrical configuration of the document viewing terminal 10 will be described while referring to the block diagram of Fig. 3. As shown in Fig. 3, the document viewing terminal 10 is provided with a CPU 100 that controls the document viewing terminal 10. The CPU 100 is connected to a display control section 103 that is connected to the display panel 104 for controlling display contents of the display panel 104, a memory card interface (hereinafter referred to as I/F) 105 to which a memory card 106 that is a portable-type external memory can be connected, a key I/F 107 that is connected to the operation keys 108 for controlling inputs from the operation keys 108, a ROM 109 that stores programs and the like executed by the CPU 100, a RAM 110 that temporarily stores data, a constantly operating RAM 111, and a USB I/F 112 for connecting a USB cable to connect to the PC 20.

Here, a system for electric power supply in the document viewing terminal 10 will be described. The document viewing terminal 10 is supplied with electric power from a display section power source 120. The RAM 110 is supplied with electric power from a RAM power source 122. The other units such as the CPU 100 and the constantly operating RAM 111 are supplied with electric power from a system power source (not shown). The display panel 104 is connected to the display section power source 120 via a display section power switch 121, and the CPU 100 controls turning on and off of the display section power switch 121. Further, the RAM 110 is connected to the RAM power source 122 via a RAM power switch 123, and the CPU 100 also controls turning on and off of the RAM power switch 123. The display panel 104 employs an electrophoretic type display section that holds display contents even after the power is turned off. Thus, the CPU 100 controls such that the display section power source 120 and the RAM power source 122 are connected only when display of the display panel 104 is updated, thereby saving power consumption.

Note that the ROM 109 stores a device_ID for distinguishing the document viewing terminal 10 from other document viewing terminals. Further, the constantly operating RAM 111 stores information relating to a document received from the PC 20 (received document information) and information of the document itself.

Next, the electrical configuration of the PC 20 will be described while referring to the block diagram of Fig. 4. As shown in Fig. 4, the PC 20 is provided with a CPU 200 that controls the PC 20. The CPU 200 is connected to a RAM 201 that temporarily stores various data, a ROM 202 that stores BIOS and the like, and an I/O interface 203 that mediates data reception and transmission. A hard disk device 280 which is nonvolatile storage means is connected to the I/O interface 203. The hard disk device 280 is provided with at least a history database storage area 281, a reserved command storage area 282, a program storage area 283, and an other information storage area 284.

Note that the history database storage area 281 stores information relating to a document that has been transmitted to the document viewing terminal 10. The reserved command storage area 282 stores operation commands for the document viewing terminal 10. The program storage area 283 stores programs executed by the CPU 200. The other information storage area 284 stores other information used in the PC 20.

Further, the I/O interface 203 is connected to a mouse 210, a video controller 204, a key controller 205, a CD-ROM drive 206, a FD drive 207, a USB controller 208, and a communication device 218. A display 214 is connected to the video controller 204, a keyboard 215 is connected to the key controller 205, and the communication device 218 can be connected to the Internet 30. Also, the document viewing terminal 10 is connected to the USB controller 208 via a USB cable. Note that a CD-ROM 216 that is inserted in the CD-ROM drive 206 stores a control program for the PC 20. During installation, the control program is set up to the hard disk device 280 from the CD-ROM 216, and stored in the program storage area 283. Further, the FD drive 207 is capable of reading from and writing to a flexible disk 217. Note that the control program may be installed from another terminal via the Internet 30, not from the CD-ROM 216.

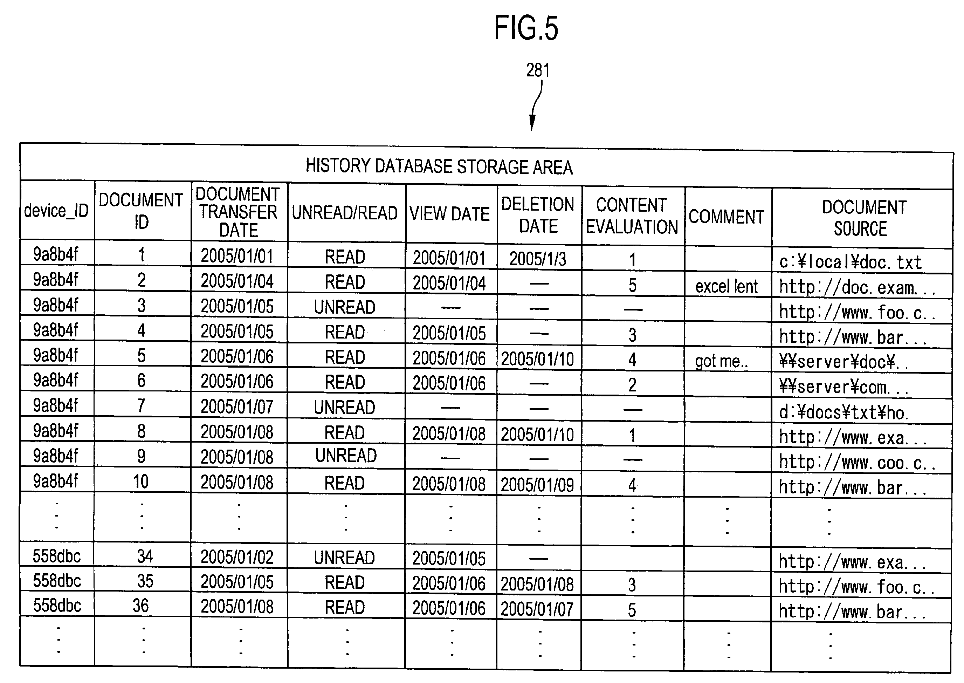

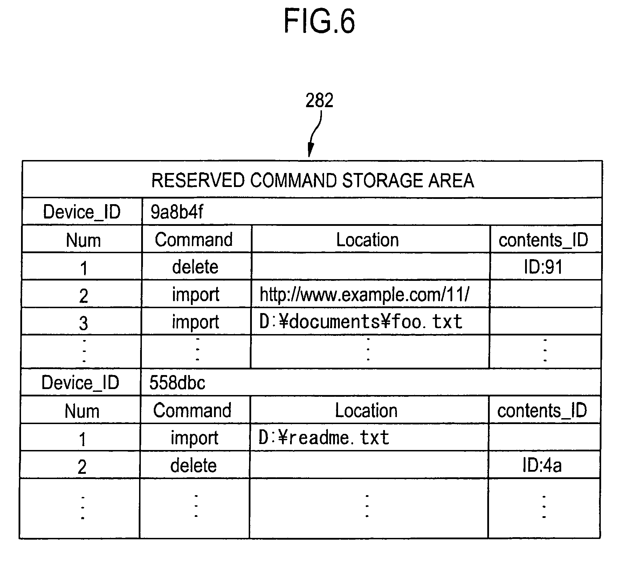

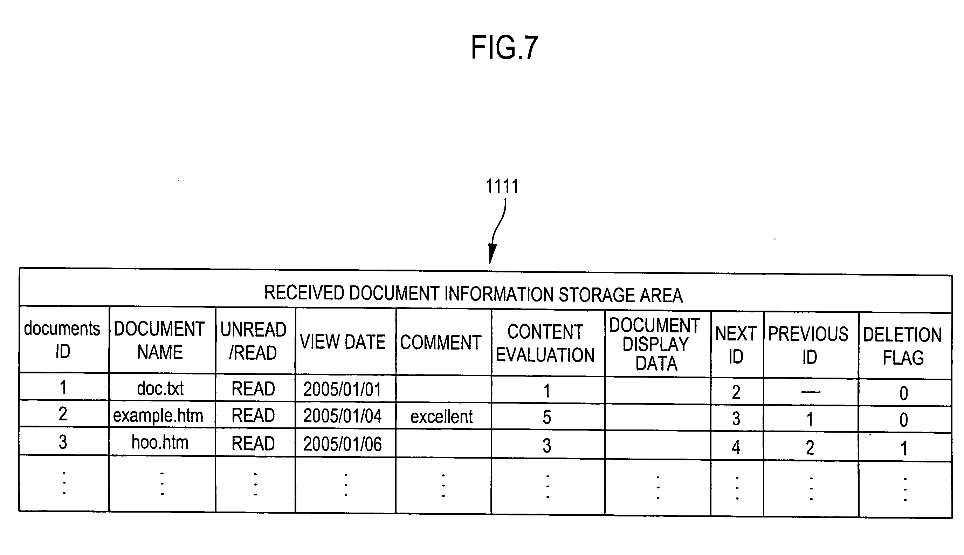

Next, information stored in the PC 20 and the document viewing terminal 10 will be described while referring to Figs. 5 through 7. Fig. 5 is an explanatory diagram showing the configuration of the history database storage area 281 in the hard disk device 280 of the PC 20. Fig. 6 is an explanatory diagram showing the configuration of the reserved command storage area 282 in the hard disk device 280 of the PC 20. Fig. 7 is an explanatory diagram showing the configuration of a received document information storage area 1111 provided in the constantly operating RAM 111 of the document viewing terminal 10.

First, the history database storage area 281 in the hard disk device 280 of the PC 20 will be described while referring to Fig. 5. As shown in Fig. 5, the history database storage area 281 is provided with a device_ID section, a document ID section, a document transfer date section, an unread/read section, a view date section, a deletion date section, a content evaluation section, a comment section, and a document source section. The device_ID section stores IDs of the document viewing terminals 10. The document ID section stores IDs for identifying documents in each document viewing terminal 10. The document transfer date section stores dates on which documents are transferred to the document viewing terminal 10. Further, the unread/read section stores information of whether the.document has been viewed (whether the document has been read, that is, whether the document has been displayed) in the document viewing terminal 10. The view date section stores dates on which documents are viewed in the document viewing terminal 10. The deletion date section stores dates on which documents are deleted in the document viewing terminal 10. In case that a document is not viewed or deleted, no date is stored in the view date section or in the deletion date section.

In the document viewing terminal 10 of the present embodiment, five-staged evaluations can be given to viewed documents. The content evaluation section stores values (1, 2, 3, 4, or 5) of these evaluations. In addition, comments can be given to documents on the PC 20, and the comment section stores contents of the comments. Further, the document source section stores information indicative of locations in which documents to be transferred are stored. URLs are stored for documents on the Internet, and paths are stored for documents in the PC 20.

Next, the reserved command storage area 282 will be described while referring to Fig. 6. Commands given in a state where the document viewing terminal 10 is not connected are stored here, and these commands to the document viewing terminal 10 are read out and executed when the document viewing terminal 10 is connected. As shown in Fig. 6, the reserved command storage area 282 is provided with a device_ID section, a Num section, a Command section, a Location section, and a Contents_ID section. The device_ID section stores IDs of the document viewing terminals 10 that execute commands. In the Num section, numbers for identifying commands for each document viewing terminal 10 are assigned. The Command section stores commands. In the present embodiment, two commands "import" and "delete" are prepared. The "import" is a command for transferring a document to the document viewing terminal 10, and the "delete" is a command for deleting a document from the document viewing terminal 10. The Location section stores locations where documents to be transferred exist. Further, the Contents_ID section stores IDs of documents (document IDs) to be deleted.

In an example shown in Fig. 6, for the document viewing terminal 10 with an ID of "9a8b4f", a "delete" command for deleting a document with a document ID of "91" is reserved as a first command, an "import" command for transferring a document existing at "http://www.example.com/ll/..." is reserved as a second command, and an "import" command for transferring a document existing at "D:¥documents¥foo.txt" is reserved as a third command. Other commands are omitted. Further, for the document viewing terminal 10 with an ID of "558dbc", an "import" command for transferring a document existing at "D:¥readme.txt" is reserved as a first command, a "delete" command for deleting a document with a document ID of "4a" is reserved as a second command, and other commands are omitted.

Next, the received document information storage area 1111 provided in the constantly operating RAM 111 of the document viewing terminal 10 will be described while referring to Fig. 7. As shown in Fig. 7, the received document information storage area 1111 is provided with a document ID section, a document name section, an unread/read section, a view date section, a comment section, a content evaluation section, a document display data section, a next ID section, a previous ID section, and a deletion flag section. The document ID section stores IDs for identifying documents in the document viewing terminal 10. The document name section stores document names. The unread/read section stores information of whether the document has been viewed or not. The view date section stores dates on which the documents are viewed. The comment section stores comments for documents. The document display data section stores display data of documents for displaying on the display panel 104. The next ID section stores an ID of a document to be displayed when displaying of "next document" is instructed, while the previous ID section stores an ID of a document to be displayed when displaying of "previous document" is instructed. The deletion flag section stores flags indicating whether a document is specified to be deleted in the document viewing terminal 10. The deletion flag section stores "1" if the document is specified to be deleted, and stores "0" if the document is not specified to be deleted.

In an example shown in Fig. 7, a document with a document ID "1" has a document name "doc.txt", and is viewed on January 1, 2005, while the content evaluation is "1". Further, the next ID is "2", no previous ID exists, and deletion is not specified. A document with a document ID "2" has a document name "example.htm", and was viewed on January 4, 2005. The comment "excellent" is registered, and the content evaluation is "5". Further, the next ID is "3" while the previous ID is "1", and deletion is not specified. A document with a document ID "3" has a document name "hoo.htm", was viewed on January 6, 2005, and the content evaluation is "3". Further, the next ID is "4" while the previous ID is "2", and deletion is specified. Note that documents with other IDs and document display data are not shown in the drawing.

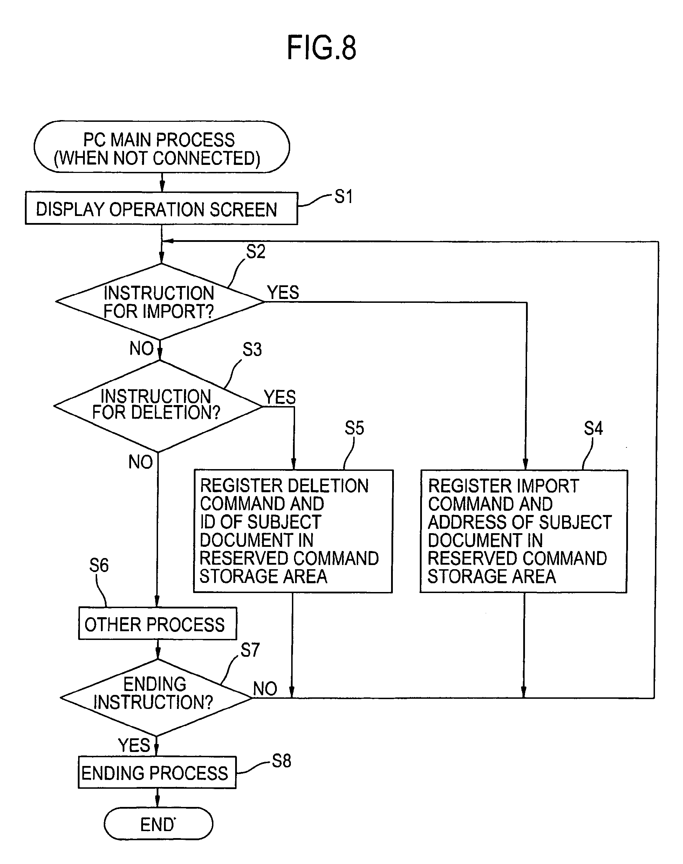

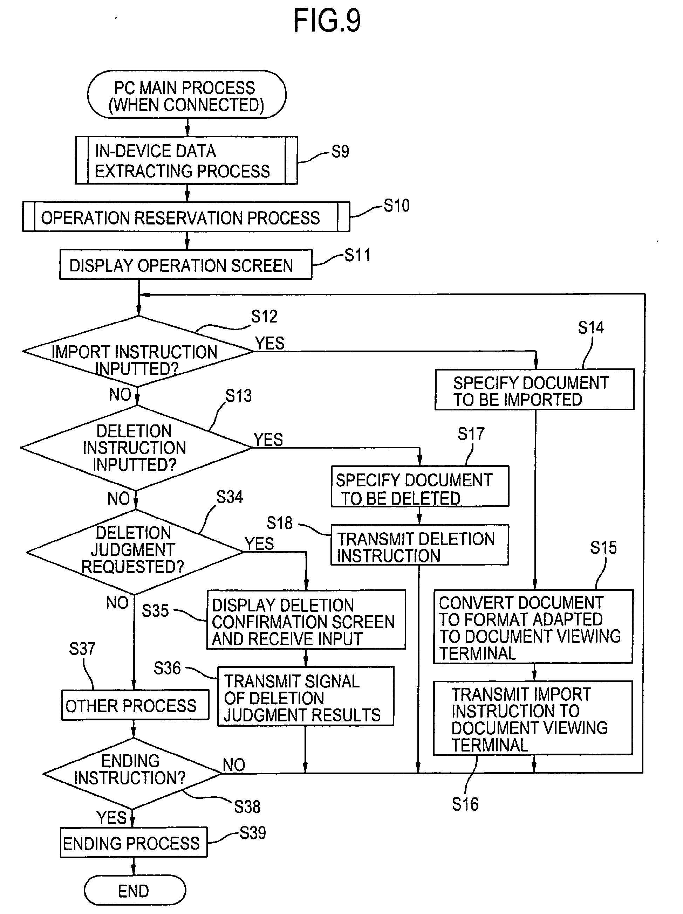

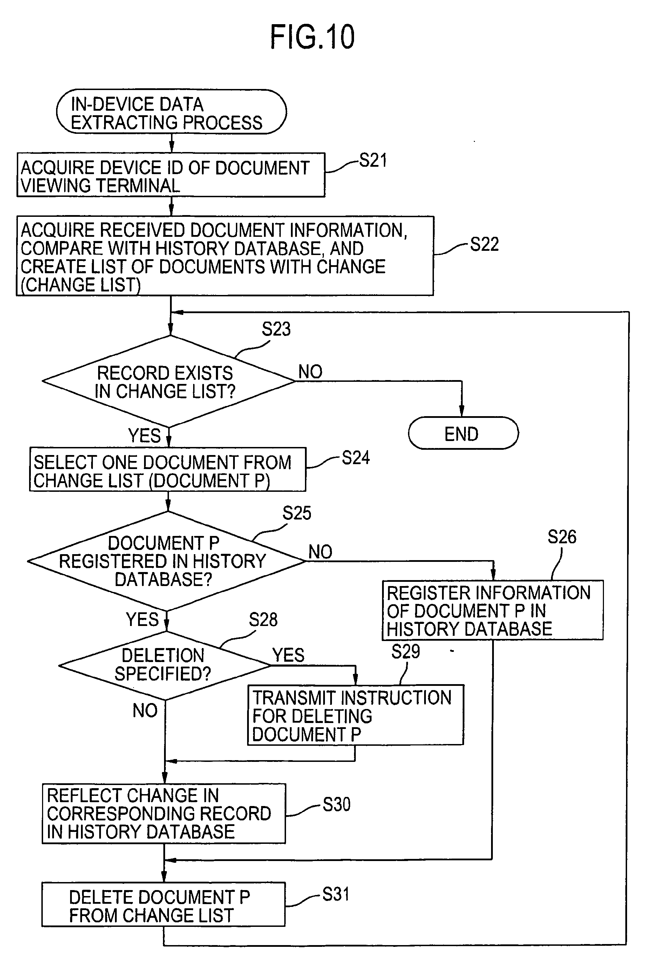

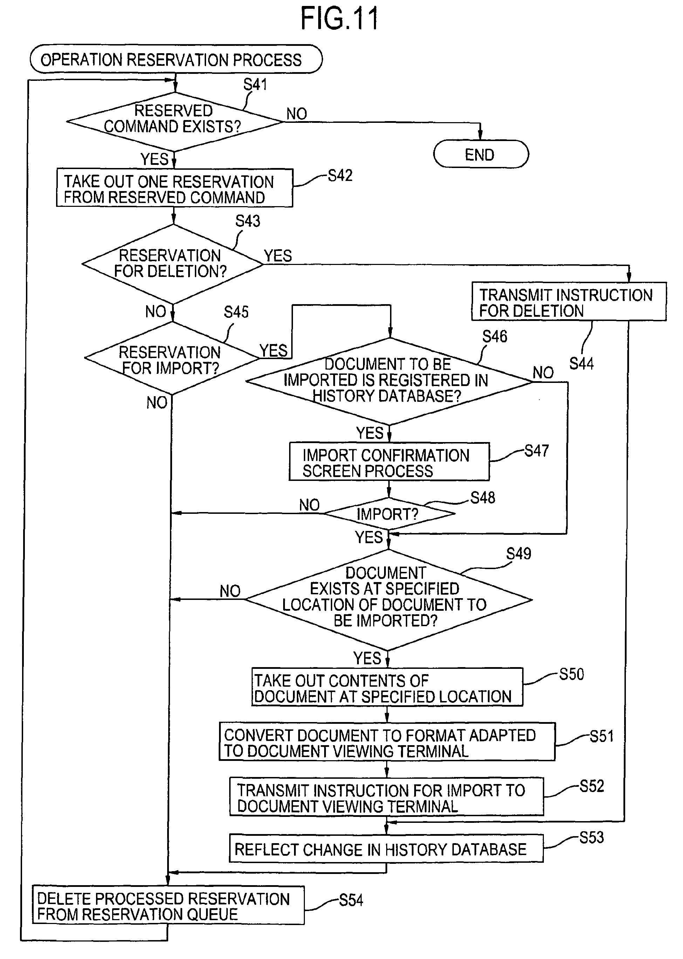

Next, processes in the PC 20 will be described while referring to Figs. 8 through 11. Fig. 8 is a flowchart of a main process of a document viewing terminal operating program in a state where the document viewing terminal 10 is not connected. Fig. 9 is a flowchart of the main process of the document viewing terminal operating program in a state where the document viewing terminal 10 is connected. Fig. 10 is a flowchart of an in-device data extraction process executed in the main process when the document viewing terminal 10 is connected. Fig. 11 is a flowchart of an operation reservation queue process executed in the main process when the document viewing terminal 10 is connected.

First, the main process executed by the CPU 200 when the document viewing terminal 10 is not connected will be described while referring to Fig. 8. This process is started when a user manually launches the document viewing terminal operating program in the PC 20. First, an operation screen is displayed (S1). In this operation screen, provided are a button for instructing import of a document, a button for instructing deletion of a document, and a button for instructing ending of the document viewing terminal operating program, and the like (corresponding to "operation inputting means"). Further, if the button for instructing import is selected and the import of a document is instructed (S2: YES), a selection screen is displayed for selecting which document is to be imported to which document viewing terminal 10, and upon receiving inputs therefrom, a reservation content is stored in the reserved command storage area 282 (S4). Specifically, the selection screen displays a screen where a document that can be read from the PC 20 can be selected. Then, when a document is selected, a list of device IDs of the document viewing terminals 10 that have been previously connected is displayed. When a device ID is selected, a new record is added to a specified device_ID in the reserved command storage area 282. At that time, a value obtained by adding "1" to a maximum number of already registered records is stored in the Num section. The "import" is stored in the Command section. The URL or path of the specified document is stored in the Location section. Then, the process returns to S2.

Further, if the button for instructing deletion is selected and the deletion of a document is instructed (S2: NO, S3: YES), then a selection screen is displayed for selecting which document is to be deleted from which document viewing terminal 10, and upon receiving inputs therefrom, a reservation content is stored in the reserved command storage area 282 (S5). Specifically, the selection screen displays a list of contents stored in the history database storage area 281. Then, if a document to be deleted is selected from the list, a new record is added to a specified device_ID in the reserved command storage area 282. At that time, a value obtained by adding "1" to a maximum number of already registered records is stored in the Num section. The "delete" is stored in the Command section. A value in the document ID section of the history database storage area 281 is stored in the contents_ID section. Then, the process returns to S2.

Further, if neither the button for instructing import nor the button for instructing deletion is selected (S2: NO, S3: NO), other process is executed (S6). Then, if an instruction for ending the process is not given (S7: NO), the process returns to S2. Also, if a button for instructing an end of the document viewing terminal operating program is selected and an end of the process is instructed (S7: YES), ending processes such as a process for closing a history database and a process for closing the operation screen is executed (S8) and the document viewing terminal operating program ends.

In this way, if import or deletion of a document is instructed when the document viewing terminal 10 is not connected to the PC 20, the reserved contents are registered in the reserved command storage area 282.

Next, the main process of the document viewing terminal operating program in a state where the document viewing terminal 10 is connected will be described while referring to the flowchart of Fig. 9. A connection program that monitors whether the document viewing terminal 10 is connected is constantly running in the PC 20. If connection of the document viewing terminal 10 is detected (the CPU 200 executing this process corresponds to "connection detecting means"), the document viewing terminal operating program is launched and the main process when the document viewing terminal 10 is connected is executed.

First, the in-device data extracting process will be executed (S9, see Fig. 10). Here, received document information of the connected document viewing terminal 10 is acquired, and information in the history database storage area 281 in the PC 20 is updated. Specifically, as shown in Fig. 10, first, a signal requesting a device ID is transmitted to the document viewing terminal 10, and accordingly the device ID transmitted from the document viewing terminal 10 is acquired (S21). Then, a change list is created (S22). Specifically, first a signal requesting acquisition of received document information is transmitted to the document viewing terminal 10, and accordingly the received document information transmitted from the document viewing terminal 10 is acquired. Then, the acquired received document information is compared with information stored in the history database storage area 281 for each document. A record is added to the change list for a document of which the view date section, the unread/read section, the content evaluation section, or the comment section is changed, for a document not registered in the history database, and for a document of which the deletion flag is on "1". The change list is provided with a document ID section, a view date section, an unread/read section, a content evaluation section, a comment section, and a deletion flag section. In each section, contents based on data stored in the received document information are stored in records of the change list.

Then, a process for updating the history database in the history database storage area 281 with the contents in the change list is executed (S23-S31). First, in order to determine whether there is a document to be updated, a determination is made whether there is a record in the change list (S23). If there is a record (S23: YES), this means there is a document to be updated and thus a record of one document is selected from the change list. The document is referred to as a document p (S24). Then, a determination is made wether the document p is registered in the history database of the history database storage area 281 (S25). This determination is made based on whether a document with an ID stored in the document ID section of the change list is stored in the document ID section of the history database in the history database storage area 281. If there is a document transferred from another PC 20 and the document is not registered in the PC 20 (S25: NO), information in the change list is additionally registered in the history database in the history database storage area 281 (S26). Then, the record of the document p is deleted from the change list (S31), and the process returns to S23.

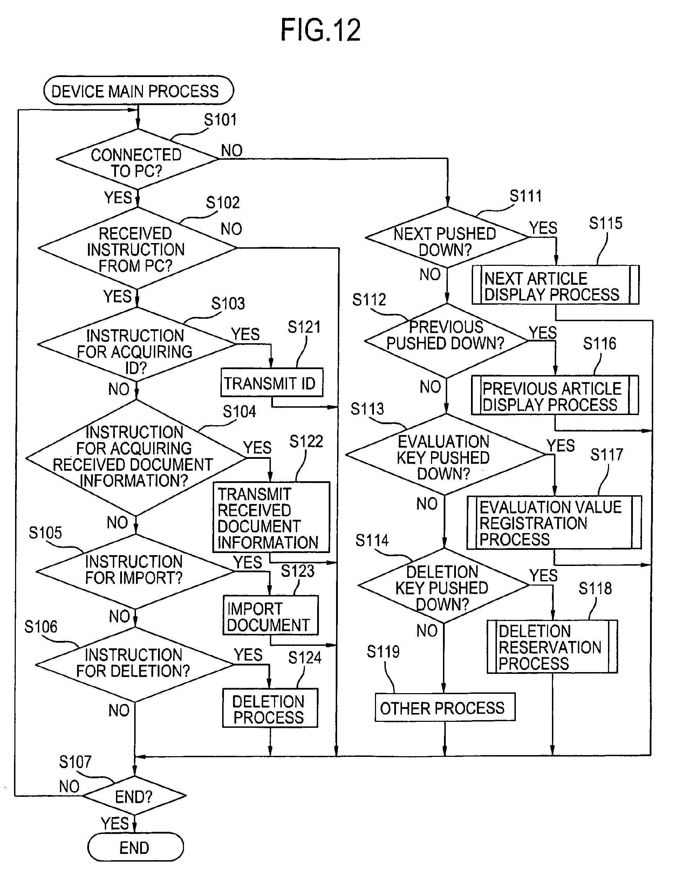

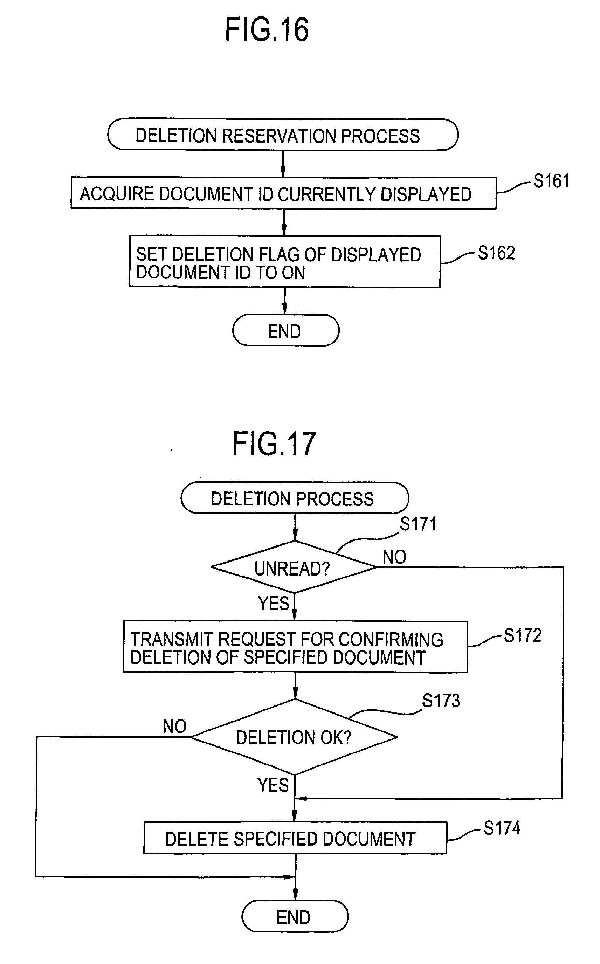

Further, if the document p is registered in the history database in the history database storage area 281 (S25: YES), then a determination is made whether the deletion flag in the change list is "1" or ON (S28). If the deletion flag is ON and hence deletion is specified (S28: YES), an instruction for deleting the document p is transmitted to the document viewing terminal 10 (S29). Upon receiving the instruction for deletion, the document viewing terminal 10 deletes information of the document ID from the received document information storage area 1111 (see Fig. 12, S106: YES, S124, Fig. 17). Then, today's date is stored in the deletion date section in the history database storage area 281 and, if there is any change in other items, the contents of the change list are stored in the corresponding items (S30). Then, the record of the document p is deleted from the change list (S31), and the process returns to S23.

If the deletion flag is not ON and hence deletion is not specified (S28: NO), the contents in the change list are stored in the history database storage area 281 (S30), the record of the document p is deleted from the change list (S31), and the process returns to S23.

Then, returning to S23, a determination is made whether there is a record in the change list (S23). If there is a record (S23: YES), processes in S24-S31 are repeated since the history database still needs to be updated. If there is no record (S23: NO), this means processes for documents to be updated are completed. Hence, the present process ends and returns to the main process. In this way, information is synchronized between the document viewing terminal 10 and the PC 20.

As shown in Fig. 9, when the in-device data extracting process (S9) ends in the main process, next the operation reservation process is executed (S10, see Fig. 11). As shown in Fig. 11, in the operation reservation process, first a determination is made whether there is a record of reservation in the reserved command storage area 282 (S41). If there is a record of reservation (S41: YES), then one record is read out from the reserved command storage area 282 and reservation is taken out (S42). Then, a determination is made whether the Command section is "delete", that is, whether the reservation is for deletion (S43). If the reservation is for deletion (S43: YES), an instruction for deleting information of a document ID stored in the Contents_ID section from the received document information storage area 1111 is transmitted to the document viewing terminal 10 (S44). Upon receiving the command for deletion, the document viewing terminal 10 deletes the information of the document ID from the received document information storage area 1111 (see Fig. 12, S106: YES, S124, Fig.17). Then, today's date is stored in the deletion date section in the history database of the document ID stored in the Contents_ID section (S53), the record of the reservation is deleted from the reserved command storage area 282 (S54), and the process returns to S41.

If the reservation is not for deletion (S43: NO) and if the Command section is "import" and the reservation is for import (S45: YES), a determination is made whether a document specified to be imported is already registered in the history database (S46). This determination is made based on whether information stored in the Location section is stored in the history database of the history database storage area 281. If already imported (S46: YES), an import confirmation screen is displayed where a confirmation massage "THE IMPORT DOCUMENT IS ALREADY IMPORTED IN THE DOCUMENT VIEWING TERMINAL. DO YOU IMPORT?", an "IMPORT" button, and a "NOT IMPORT" button are displayed (S47). If the "NOT IMPORT" button is selected (S48: NO), the process goes to S54 since no import is executed, the record of the reservation is deleted from the reserved command storage area 282 (S54), and returns to S41. If the "IMPORT" button is selected (S48: YES), then the process goes to S49 and a process for import is executed.

Further, if the import document is not yet registered in the history database (S46: NO), the process directly goes to S49 and the process for import is executed. In S49, first, a determination is made whether the document exists at a location of information stored in the Location section (S49). If the document does not exist (S49: NO), the record of the reservation is deleted from the reserved command storage area 282 (S54) since import cannot be performed, and returns to S41.

Note that the record of the reservation may be deleted after displaying a message "THE DOCUMENT DOES NOT EXIST IN THE SPECIFIED LOCATION. RESERVATION IS DELETED." or the like. Further, the message, an "OK" button, and a "CANCEL" button may be also displayed, and the record of the reservation may be deleted only if the "OK" button is selected. In this case, the CPU 200 executing these processes corresponds to "second operation information deletion controlling means", the CPU 200 displaying a screen displaying the message, the "CANCEL" button, and the "OK" button corresponds to "deletion instruction requesting means", and the "OK" button corresponds to "deletion instruction inputting means". Further, a message "THE DOCUMENT DOES NOT EXIST IN THE SPECIFIED LOCATION. SPECIFY AGAIN? CANCEL RESERVATION?" or the like, a "CANCEL" button, and a "SPECIFY AGAIN" button may be displayed, and the record of the reservation may be deleted if the "CANCEL" button is selected, while a document to be imported may be specified again if the "SPECIFY AGAIN" button is selected.

If the document exists in the specified location (S49: YES), then the document is read out from the specified location (S50), and the read out document is converted to a format adapted to the document viewing terminal 10 (S51). Then, data of the document converted to the format adapted to the document viewing terminal 10 (document display data) is transmitted to the document viewing terminal 10, together with an instruction for importing the document (S52). Then, today's date is stored in the document transfer date section for the document in the history database in the history database storage area 281 (S53), the record of the reservation is deleted from the reserved command storage area 282 (S54), and the process returns to S41.

In S41, a determination is made whether there is any record of reservation (S41). If there is a record of reservation (S41: YES), processes for the reservation are executed (S42-S54). If there is no record of reservation (S41: NO), then, since processes for all the reservations are completed, the operation reservation process ends and returns to the main process. In this way, processes for pre-registered reservations are executed.

As shown in Fig. 9, when the operation reservation process ends in the main process (S10), an operation screen (not shown) is displayed (S11). This operation screen is provided with a button for instructing import of a document, a button for instructing deletion of a document, a button for instructing ending of the document viewing terminal operating program, and the like (corresponds to "operation inputting means"). Then, if the button for instructing import is selected and import of a document is instructed (S12: YES), then a selection screen for selecting which document is to be imported to the document viewing terminal 10, and thus a document to be imported is specified (S44). When a document to be imported is specified (S14), the document is read out from the specified location and the read out document is converted to a format adapted to the document viewing terminal 10 (S15). Then, data of the document converted to the format adapted to the document viewing terminal 10 (document display data) is transmitted to the document viewing terminal 10, together with an instruction for importing the document (S16). Then, the process returns to S12 and receipt of an input to the operation screen is continuously checked.

Further, if import of a document is not instructed (S12: NO) and if the button for instructing deletion is selected and deletion of a document is instructed (S13: YES), a selection screen for selecting which document is to be deleted is displayed, and a document to be deleted is specified (S17). This selection screen displays a list of documents imported to the document viewing terminal 10, that is, a list of documents stored in the history database. When a document to be deleted is specified (S17), an instruction for deleting the document is transmitted to the document viewing terminal 10 (S18).

Further, if neither the button for instructing import nor the button for instructing deletion is selected (S12: NO, S13: NO), a determination is made whether a confirmation request signal has been received from the document viewing terminal 10 (S34). The document viewing terminal 10 deletes the document display data of the specified document ID and the received document information in accordance with a deletion instruction transmitted in S18. Here, if the document specified to be deleted is unread, the document viewing terminal 10 transmits the confirmation request signal for requesting confirmation of whether information relating to the document can be surely deleted (see Fig. 12, S124, Fig. 17, S172). Hence, if the confirmation request signal has been received (S34: YES), in response to this confirmation request, on the display 214, a message prompting a confirmation such as "THIS DOCUMENT IS UNREAD. ARE YOU SURE TO DELETE?", information relating to the document such as a document ID and a document source, and a confirmation screen (not shown) displaying an OK button and a cancel button are displayed, and an input is received (S35). Then, a signal indicative of "deletion OK" is transmitted to the document viewing terminal 10 if the OK button is selected, while a signal indicative of "deletion NG" is transmitted to the document viewing terminal 10 if the cancel button is selected (S36). Then, the process returns to S12.

Further, if the confirmation request signal has not been received (S34: NO), other process is executed (S37). If an ending instruction is not given after the other process is executed (S38: NO), the process returns to S12. Further, if an button for instructing ending of the document viewing terminal operating program is selected and an ending instruction is given (S38: YES), an ending process such as a process for closing the history database and a process for closing the operation screen is executed (S39) and the document viewing terminal operating program ends.

In this way, when the document viewing terminal 10 is connected to the PC 20, processes reserved beforehand are executed after the information is synchronized between the document viewing terminal 10 and the PC 20. Then, if import and deletion of documents are instructed, those processes are executed.

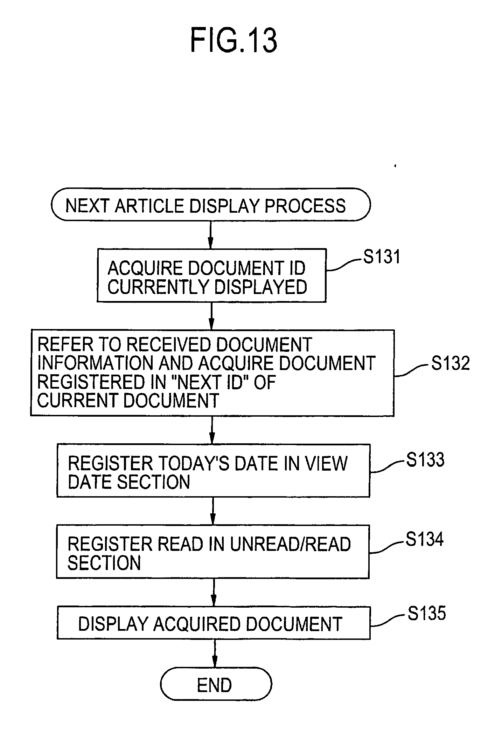

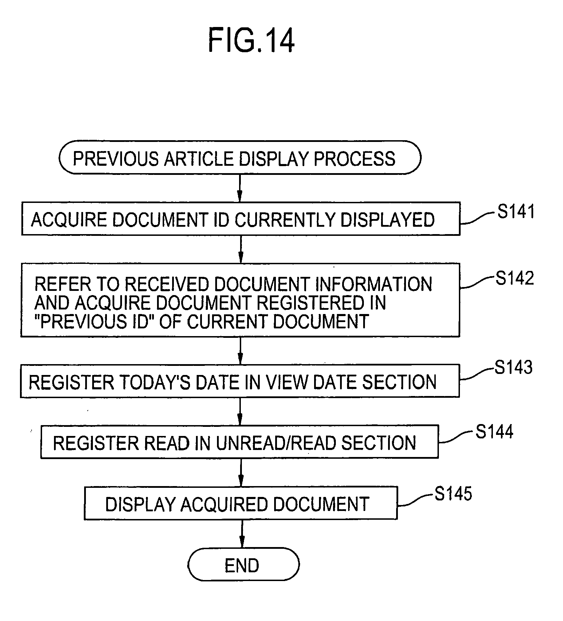

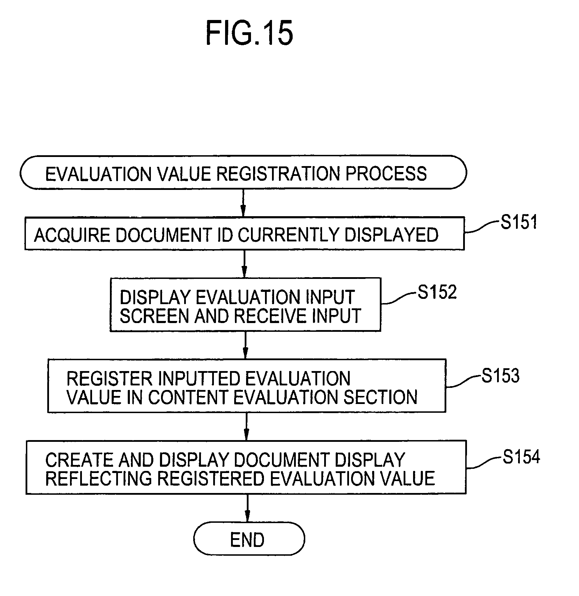

Next, a process executed by the CPU 100 of the document viewing terminal 10 will be described while referring to Figs. 12 through 17. Fig. 12 is a flowchart of a device main process executed in the document viewing terminal 10. Fig. 13 is a flowchart of a next article display process executed in the device main process. Fig. 14 is a flowchart of a previous article display process executed in the device main process. Fig. 15 is a flowchart of an evaluation value registration process executed in the device main process. Fig. 16 is a flowchart of a deletion reservation process executed in the device main process. Fig. 17 is a flowchart of a deletion process executed in the device main process.

As shown in Fig. 12, in the device main process, first a determination is made whether the document viewing terminal 10 is connected to the PC 20 (S101). If the PC 20 is connected to the USB I/F 112 (S101: YES), processes in accordance with instructions from the PC 20 are executed (S102-S106, S121-S124). If the PC 20 is not connected to the USB I/F 112 (S101: NO), stand-alone processes in the document viewing terminal 10 are executed (S111-S119).

First, a case in which the document viewing terminal 10 is connected to the PC 20 will be described (S101: YES). First, a determination is made whether an instruction from the PC 20 has been received (S102). If no instruction from the PC 20 is received, the process goes to S107. If an instruction from the PC 20 has been received (S102: YES), a determination is made whether the instruction is for requesting acquisition of a device ID (S103). If the instruction is for requesting acquisition of a device ID (S103: YES), a device ID identifying the document viewing terminal 10 itself stored in the ROM 109 is transmitted to the PC 20 (S121). Then, the process goes to S107. If the instruction is not for requesting acquisition of a device ID (S103: NO), a determination is made whether the instruction is for requesting acquisition of received document information (S104). If the instruction is for requesting acquisition of received document information (S104: YES), received document information stored in the received document information storage area 1111 of the constantly operating RAM 111 is read out and transmitted to the PC 20 (S122). Then, the process goes to S107. The device ID and the received document information are used for updating the history database in the PC 20.

If the instruction is not for requesting acquisition of received document information (S104: NO), a determination is made whether the instruction is for import of a document (S105). If the instruction is for import of a document (S105: YES), data of a document converted to a format adapted to the document viewing terminal 10 (document display data) transmitted together with the instruction is stored, and information relating to the document is stored in received document information (S123). Then, the process goes to S107. If the instruction is not for import of a document (S105: NO), a determination is made whether the instruction is for deletion (S106). If the instruction is for deletion (S106: YES), a deletion process shown in Fig. 17 is executed (S124). In the deletion process, as shown in Fig. 17, the unread/read section of the received document information in document display data of a document with the specified document ID is read out, and a determination is made whether the document is unread (S171). If the document is not unread (S171: NO), the document display data of the document with the specified document ID is deleted, and is also deleted from the received document information (S174). Then, returning to the device main process, the process goes to S107. On the other hand, if the document is unread (S171: YES), a signal indicative of a confirmation request of whether the document with the specified document ID can be deleted is transmitted to the PC 20 (S172). If a signal indicative of deletion OK is transmitted from the PC 20 (S173: YES), the document display data of the document with the specified document ID is deleted, and is also deleted from the received document information (S174). Then, returning to the device main process, the process goes to S107. However, if a signal indicative of deletion OK is not transmitted (S173: NO), the present process ends without deleting the document display data of the specified document ID or the received document information. Returning to the device main process, the process goes to S107.

In S107, a determination is made whether an ending instruction has been executed (S107). If the ending instruction has not been executed (S107: NO), the process returns to S101.

Further, if the document viewing terminal 10 is not connected to the PC 20 (S101: NO), a determination is made whether the next key 84 has been pushed down (S111). If the next key 84 has been pushed down (S111: YES), the next article display process shown in Fig. 13 is executed (S115). In the next article display process, as shown in Fig. 13, a document ID of a document currently displayed on the display panel 104 is acquired (S131). The document ID of the currently-displayed document is stored in the constantly operating RAM 111. Then, the received document information is referred to for a record of the document ID, the next ID section is referred to for a document ID stored therein, and document display data of the document ID is acquired (S132). Subsequently, today's date is registered in the view date section of a record of received document information of the document ID specified in the next ID section (S133), and a code indicative of read ("1") is registered in the unread/read section (S134). Then, the document display data acquired in S132 is displayed on the display panel 104 (S135), and the present process ends. Returning to the device main process, the process goes to S107.

Further, as shown in Fig. 12, in the device main process, if the next key 84 has not been pushed down (S111: NO) but the previous key 83 has been pushed down (S112: YES), the previous article display process shown in Fig. 14 is executed (S116). In the previous article display process, as shown in Fig. 14, a document ID of a document currently displayed is acquired (S141). Then, the received document information is referred to for a record of the document ID, the previous ID section is referred to for a document ID stored therein, and document display data of the document ID is acquired (S142). Subsequently, today's date is registered in the view date section of a record of received document information of the document ID specified in the previous ID section (S143), and a code indicative of read ("1") is registered in the unread/read section (S144). Then, the document display data acquired in S142 is displayed on the display panel 104 (S145), and the present process ends. Returning to the device main process, the process goes to S107.

Further, as shown in Fig. 12, in the device main process, if the previous key 83 has not been pushed down (S112: NO) but the evaluation key 85 has been pushed down (S113: YES), the evaluation value registration process shown in Fig. 15 is executed (S117). In the evaluation value registration process, as shown in Fig. 15, a document ID of a document currently displayed is acquired (S151). Then, an evaluation input screen (not shown) is displayed and inputs are received (S152). In this evaluation input screen, one evaluation can be selected from five-staged evaluation values. For example, six radio buttons are provided for respective values of 1-5 and for no evaluation, and can be selected with the up key 81 and the down key 82. An end button is also provided. When the end button is selected with the up key 81 and the down key 82 and the evaluation key 85 is pushed down, the input is received. When the input is received, an inputted evaluation value is stored in the content evaluation section of received document information of the document ID (S153). The document display data of the document with the document ID is again displayed on the display panel 104 (S154). Then, the present process ends. Returning to the device main process, the process goes to S107.

Then, as shown in Fig. 12, in the device main process, if the evaluation key 85 has not been pushed down (S113: NO) but the delete key 86 has been pushed down (S114: YES), the deletion reservation process shown in Fig. 16 is executed (S118). In the deletion reservation process, as shown in Fig. 16, a document ID of a document currently displayed is acquired (S161). The deletion flag of received document information of the acquired document ID is set to ON "1" (S162). Then, the present process ends. Returning to the device main process, the process goes to S107. Hence, since the deletion flag is set to ON, the document display data of the document ID and the record of the received document information are deleted according to a deletion instruction from the PC 20 when the document viewing terminal 10 is connected to the PC 20.

Further, in the device main process, if none of the above-mentioned keys has been pushed down (S114: NO), the other process is executed (S119) and the process goes to S107. In S107, a determination is made whether an ending instruction has been executed (S107). If an ending instruction has not been executed (S107: NO), the process returns to S101. If an ending instruction has been executed (S107: YES), the present process ends.

As described above, when connected to the PC 20, the document viewing terminal 10 newly adds or deletes documents to be displayed, in accordance with instructions from the PC 20. Also, when a document is reviewed, the view date and a status of unread/read are updated. The received document information storing such information is transmitted to the PC 20 when the PC 20 and the document viewing terminal 10 are connected, thereby allowing the history database in the PC 20 and the received document information in the document viewing terminal 10 to be synchronized.

Accordingly, the PC 20 stores commands to the document viewing terminal 10 for specifying a document to be imported and for specifying a document to be deleted when the PC 20 is not connected to the document viewing terminal 10, and these stored commands are executed at a time when the PC 20 is connected to the document viewing terminal 10. Further, since the PC 20 acquires the received document information of the document viewing terminal 10 and updates the contents of the history database in itself when connected to the document viewing terminal 10, the information in the PC 20 and the information in the document viewing terminal 10 can be synchronized.

Note that the PC 20 in the above-described embodiment corresponds to "document viewing terminal operating device", and the program of the main processes in Figs. 8 and 9 corresponds to "operating program". The USB controller 208 corresponds to "connecting means", the reserved command storage area 282 corresponds to "operation information storing means", and the history database storage area 281 corresponds to "transmitted document 'information storing means". Further, the CPU 200 executing the process of S14 in the main process when connected shown in Fig. 9 and the process of S50 in the operation reservation process shown in Fig. 11 corresponds to "document reading means", the CPU 200 executing the process of S15 in the main process when connected shown in Fig. 9 and the process of S51 in the operation reservation process shown in Fig. 11 correspond to "format converting means", S16 in the main process when connected shown in Fig. 9, the I/O interface 203, and the USB controller 208 correspond to "transmitting means", and the CPU 200 executing the processes of S15 and S16 in the main process when connected shown in Fig. 9 and the processes of S51 and S52 in the operation reservation process shown in Fig. 11 correspond to "conversion document transmission controlling means".

Further, the CPU 200 executing the processes of S4 and S5 in the main process when not connected shown in Fig. 8 corresponds to "operation information storage controlling means", and the CPU 200 executing the operation reservation process shown in Fig. 11 (S10 of the main process when connected shown in Fig. 9) corresponds to "operation execution controlling means". Further, the CPU 200 executing the process of S54 in the operation reservation process shown in Fig. 11 corresponds to "operation information deleting means", and the CPU 200 executing the processes of S49 and S54 in the operation reservation process shown in Fig. 11 corresponds to "first operation information deletion controlling means". Further, the CPU 200 executing the process of S22 in the in-device data extracting process shown in Fig. 10 corresponds to "received document information reading means" and "document information comparison determining means", the CPU 200 executing the process of S30 in the in-device data extracting process shown in Fig. 10 corresponds to "transmitted document information updating means", and the CPU 200 executing the process of S26 in the in-device data extracting process shown in Fig. 10 corresponds to "first document information matching means".

Further, the I/O interface 203, the USB controller 208, and the CPU 200 executing the process of S34 in the PC main process when connected shown in Fig. 9 correspond to "confirmation request signal receiving means", the CPU 200 executing the process of S35 that displays a deletion confirmation screen displaying a deletion confirmation message on the display 214 correspond to "deletion judgment requesting means", the CPU 200 executing the process of S35 that provides the OK button and the cancel button on the deletion screen to display on the display 214 correspond to "deletion judgment inputting means", and the CPU 200 executing the process of S36, the I/O interface 203, and the USB controller 208 correspond to "deletion judgment result signal transmitting means". Further, the CPU 100 of the document viewing terminal 10 executing the process of S172 in the deletion process shown in Fig. 17 and the USB I/F 112 correspond to "confirmation request signal transmitting means, and the CPU 100 executing the deletion process shown in Fig. 17 corresponds to "deletion controlling means".

The document viewing terminal operating device and storage medium storing a program for operating a document viewing terminal according to the present invention are not limited to the above-described embodiment, and it would be apparent to those skilled in the art that various changes and modifications may be made therein without departing from the spirit of the invention.

Although the document viewing terminal 10 is provided with the display panel 104 of an electrophoretic type, it goes without saying that the display panel 104 need not be of an electrophoretic type and may be a display panel of another type such as a liquid crystal display panel. Further, although a wired USB connection is employed for connection between the document viewing terminal 10 and the PC 20, it goes without saying that other types of connection may be employed such as serial connection, LAN connection (wired/wireless), wireless communication such as infrared-ray communication, wireless USB connection, or the like.

In the above-described embodiment, if the document p is not registered in the history database in the history database storage area 281 (S25: NO), information in the change list is additionally registered in the history database in the history database storage area 281 (S26). However, if the document exists in the document viewing terminal 10 and does not exist in the PC 20, the document may be deleted from the document viewing terminal 10 without additionally registering the document in the history database of the PC 20 (the CPU 200 executing this process corresponds to "second document information matching means"). In this case, if the document p is not registered in the history database in the history database storage area 281 (S25: NO), an instruction for deleting a document ID of the document p is transmitted to the document viewing terminal 10.

Further, in the above-described embodiment, operations to the document viewing terminal 10 only include "import" and "delete" and, when modifying a document that is already imported, a modification is implemented by executing an instruction of "import" and selecting the "import" button in an import confirmation screen. However, an instruction of "modify" may be provided and, in that case, document display data of a newly-specified document may be transmitted unconditionally.

Further, in the above-described embodiment, a URL or path is stored as a storage location of a document in the document source section in the history database stored in the history database storage area 281. However, as to a document of which storage location is on a network, the document itself may be stored in the history database. This way, even in a case where the PC 20 is not connected to the network, contents of the document can be retained. In this case, if import of a document whose storage location is on the network is instructed, the document itself stored in the history database, not at a location stored in the document source section, is read out in S50 in the operation reservation process of Fig. 11 and in S14 in the main process when connected.

Further, if the document viewing terminal 10 is specified as output destination of a print command when a word processor software or a spreadsheet software is running on the PC 20, a process similar to a case where import of a document is performed may be executed. In this case, if the document viewing terminal 10 specified as the output destination is not connected to the PC 20, S4 in Fig. 8 (registration to the reserved command storage area 282) is executed. If the document viewing terminal 10 specified as the output destination is connected to the PC 20, S15 and S16 in Fig. 9 (conversion to a format adapted to the document viewing terminal 10 and transmission of a converted document display data to the document viewing terminal 10) are executed.

Also, the device_ID may be stored in a memory card so that each memory card can be identified individually.

Further, in the above-described embodiment, when import of a document is instructed in the PC 20 (Fig. 8, S2: YES), the selection screen for selecting which document is imported to which document viewing terminal 10 is displayed, and the reserved contents are stored in the reserved command storage area 282 upon receiving the input (S4). Then, the reserved document is converted to a format adapted to the document viewing terminal 10 at a time when the PC 20 is connected to the document viewing terminal 10 and the reservation is executed (Fig. 11, S51). However, an area for storing format-converted document display data may be provided in the reserved command storage area 282, and the conversion of a format may be performed at a time when import of a document is instructed (S2: YES) and the reserved contents are stored (S4), not a time when the reservation is executed (S51).

Note that, in the above-described embodiment, as to a document for which deletion is instructed in the PC 20 (Fig. 12, S106: YES, S124), if the document is unread in the document viewing terminal 10 (Fig. 17, S171: YES), a signal of a request for confirming whether the document can really be deleted is transmitted to the PC 20 (S172) and a confirmation screen is displayed on the PC 20 so that a user can determine whether the document is to be deleted. However, as to a document for which deletion is instructed in the PC 20, if the document is unread in the document viewing terminal 10, a similar confirmation message may be displayed on the display panel of the document viewing terminal 10 so that the user can select "OK" or "cancel" thereon, instead of confirming on the PC 20. Also, if the document is unread, unconditional deletion of the document may not be executed. In this case, a message such as "DOCUMENT IS NOT DELETED SINCE UNREAD" may be displayed on the PC 20 or on the document viewing terminal 10.

### Industrial Applicability

The document viewing terminal operating device and the storage medium storing a program for the operating document viewing terminal according to the present invention are applicable to a terminal that transmits data to a portable-type terminal and a storage medium storing a program that operates on the terminal.

## Claims

1. A document viewing terminal operating device (20) connected to a document viewing terminal (10) that displays a document and transmitting the document to the document viewing terminal (10), comprising:
connecting means (208) for connecting to the document viewing terminal (10);
connection detecting means (200) for detecting that the document viewing terminal (10) is connected to the connecting means (208);
document reading means (200, S50) for reading a document;
format converting means (200, S51) for converting the document read by the document reading means (200, S50) to a conversion document that is a document in a file format that can be displayed on the document viewing terminal (10);
transmitting means (203, 208, S16) for transmitting data to the document viewing terminal (10);
conversion document transmission controlling means (200, S15, S16, S51, S52) for transmitting the conversion document to the document viewing terminal (10) by the transmitting means (203, 208, S16), after the document is converted by the format converting means (200, S51);
operation inputting means for inputting an instruction of at least one operation among import, deletion, or update of the document in the document viewing terminal (10);
operation information storing means (282) for storing operation information that is information indicative of content of operation to the document viewing terminal (10);
operation information storage controlling means (200, S4, S5) for storing the operation information in the operation information storing means (282), if the instruction of operation to the document viewing terminal (10) is inputted by the operation inputting means and if the document viewing terminal (10) is not connected to the connecting means (208); and
operation execution controlling means (200, S10) for executing the instruction indicated by the operation information, if the connection detecting means (200) detects that the document viewing terminal (10) is connected and if the operation information is stored in the operation information storing means (282).

2. The document viewing terminal operating device as claimed in claim 1, wherein the operation information storage controlling means (200, S4, S5) stores information indicative of a storage location of the document in the operation information storing means (282) as the operation information, not content of the document, in response to an instruction for importing the document to the document viewing terminal (10).

3. The document viewing terminal operating device as claimed in claim 2, further comprising:
operation information deleting means (200, S54) for deleting the operation information from the operation information storing means (282); and
first operation information deletion controlling means (200, S49, S54) for deleting the operation information from the operation information storing means (282) by the operation information deleting means (200, S54) if the document is not stored at the storage location of the operation information stored in the operation information storing means (282), when the operation execution controlling means (200, S10) executes an instruction of the operation information.

4. The document viewing terminal operating device as claimed in claim 2, further comprising:
operation information deleting means (200, S54) for deleting the operation information from the operation information storing means (282);
deletion instruction requesting means (200) for requesting an instruction of whether the operation information is to be deleted by the operation information deleting means (200, S54) if the document is not stored at the storage location of the operation information stored in the operation information storing means (282), when the operation execution controlling means (200, S10) executes an instruction of the operation information;
deletion instruction inputting means for inputting the instruction of whether the operation information is to be deleted by the operation information deleting means (200, S54) in accordance with a request by the deletion instruction requesting means (200); and
second operation information deletion controlling means (200) for deleting the operation information from the operation information storing means (282) by the operation information deleting means (200, S54), if the deletion instruction inputting means has inputted that the operation information is to be deleted.

5. The document viewing terminal operating device as claimed in one of claims 1 through 4, wherein received document information is stored in the document viewing terminal (10), the received document information being information relating to the conversion document transmitted from the document viewing terminal operating device, the received document information including at least one of content of the document, a storage location of the document, information indicative of whether the document is read or unread, information indicative of evaluation by a reader for the document, and date and time on which the document is displayed,
further comprising:
transmitted document information storing means (281) for storing transmitted document information that is information relating to the document transmitted to the document viewing terminal (10), the transmitted document information including at least one of content of the document, information indicative of whether the document is read or unread, information indicative of evaluation by a reader for the document, and date and time on which the document is displayed;
received document information reading means (200, S22) for reading the received document information stored in the connected document viewing terminal (10) if the connection detecting means (200) has detected that the document viewing terminal (10) is connected; document information comparison determining means (200, S22) for determining whether the received document information read by the received document information reading means (200, S22) is identical to the transmitted document information stored in the transmitted document information storing means (281); and
transmitted document information updating means (200, S30) for changing content of the transmitted document information to content of the received document information if the document information comparison determining means (200, S22) has determined that the received document information is different from the transmitted document information.

6. The document viewing terminal operating device as claimed in claim 5, further comprising first document information matching means (200, S26) for storing the content of the received document information in the transmitted document information storing means (281), if the document information comparison determining means (200, S22) has determined that there is information which exists in the received document information but does not exist in the transmitted document information and that the received document information is different from the transmitted document information.

7. The document viewing terminal operating device as claimed in claim 5, further comprising second document information matching means (200) for executing an instruction for deleting the received document information from the document viewing terminal (10), if the document information comparison determining means (200, S22) has determined that there is information which exists in the received document information but does not exist in the transmitted document information and that the received document information is different from the transmitted document information.

8. The document viewing terminal operating device as claimed in claim 5, wherein the operation inputting means identifies the document to be deleted, by selecting one of the transmitted document information in the transmitted document information storing means (281).

9. The document viewing terminal operating device as claimed in claim 5, wherein, if a storage location of a document in the transmitted document information stored in the transmitted document information storing means (281) is in the document viewing terminal operating device itself, information indicative of the storage location is stored; and
wherein, if the storage location of the document is not in the document viewing terminal operating device but in another device connected via a network, content of the document is stored.

10. The document viewing terminal operating device as claimed in claim 1, wherein identification information for distinguishing the document viewing terminal (10) from another document viewing terminal (10) is assigned to the document viewing terminal (10), and the operation information storing means (282) is provided for each identification information.

11. The document viewing terminal operating device as claimed in claim 1, wherein the document viewing terminal (10) includes: confirmation request signal transmitting means (100, 112, S172) for transmitting a confirmation request signal to the document viewing terminal operating device that has created the operation information, the confirmation request signal being a signal for requesting confirmation of whether to execute deletion of the document, if the received document information of the document instructed to be deleted includes information indicating that the document is unread, when the document instructed to be deleted is deleted based on an instruction by the operation information to delete the document; and deletion controlling means (100) for receiving a deletion judgment result signal that is a judgment result of whether to execute deletion transmitted from the document viewing terminal operating device in response to the confirmation request signal, and for deleting at least one of a conversion document of the document instructed to be deleted and the received document information only if the judgment result is a signal for deletion,
further comprising:
confirmation request signal receiving means (200, 203, 208, S34) for receiving the confirmation request signal transmitted from the confirmation request signal transmitting means (100, 112, S172);
deletion judgment requesting means (S200, S35) for requesting judgment of whether to execute deletion of the document instructed to be deleted, if the confirmation request signal receiving means (200, 203, 208, S34) has received the confirmation request signal;
deletion judgment inputting means (200, S35) for inputting deletion judgment of whether to execute deletion of the document in response to a request by the deletion judgment requesting means (S200, S35); and
deletion judgment result signal transmitting means (200, 203, 208, S36) for transmitting, to the document viewing terminal (10), a deletion judgment result signal that is the deletion judgment inputted by the deletion judgment inputting means (200, S35).

12. A storage medium storing a document viewing terminal operating program for allowing a computer to function as each of processing means of the document viewing terminal operating device as claimed in claim 1.

13. The storage medium storing a document viewing terminal operating program as claimed in claim 12, storing: a connection program for allowing the computer to function as the connecting means (208) and the connection detecting means (200) as claimed in claim 1; and an operation program for allowing the computer to function as each of processing means as claimed in claim 1, except the connecting means (208) and the connection detecting means (200) as claimed in claim 1,
wherein the connection program has a launch function that launches the operation program in the computer when the connection detecting means (200) has detected that the document viewing terminal (10) is connected to the connecting means (208).
